(19) Europäisches Patentamt / European Patent Office / Office européen des brevets

(11) **EP 4 644 023 A2**

(12) **EUROPEAN PATENT APPLICATION**

(43) Date of publication:
**05.11.2025 Bulletin 2025/45**

(51) International Patent Classification (IPC):
**B23B 51/06** (2006.01)

(21) Application number: **25173395.2**

(22) Date of filing: **29.04.2025**

(52) Cooperative Patent Classification (CPC):
**B23B 51/068;** B23B 2250/12; B23B 2251/40

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: **30.04.2024 ES 202430806 U**

(71) Applicant: **Universidad del País Vasco / Euskal Herriko Unibertsitatea 48940 Leioa, Bizkaia (ES)**

(72) Inventors:
• **PEREIRA NETO, Octavio Manuel Leioa, Bizkaia (ES)**

• **LÓPEZ DE LA CALLE MARCAIDE, Luis Norberto Leioa, Bizkaia (ES)**
• **FERNÁNDEZ GARCÍA, Patricia Leioa, Bizkaia (ES)**
• **LAMIKIZ METXAKA, Aitzol Leioa, Bizkaia (ES)**
• **FERNÁNDEZ VALDIVIESO, Asier Leioa, Bizkaia (ES)**
• **RODRÍGUEZ EZQUERRO, Adrián Leioa, Bizkaia (ES)**
• **GONZÁLEZ BARRIO, Haizea Leioa, Bizkaia (ES)**
• **ORTEGA RODRÍGUEZ, Naiara Leioa, Bizkaia (ES)**

(74) Representative: **Balder IP Law, S.L. Paseo de la Castellana 93 5ª planta 28046 Madrid (ES)**

(54) **DRILL BIT WITH COOLING CHANNELS AND CHIP EVACUATION CHANNELS**

(57) Drill bit (1) comprising a shank (2) for machine tool coupling, a body (3), and a tip (4) with cutting lips (5). The tip (4) comprises at least two helical flutes (6) and lands (7), each land (7) provided with an inner helical cooling channel (8) that defines a core radius ($R_n$) and terminates in outlet openings at the tip. The bit (1) comprises chip evacuation channels (9) with distal and proximal ends, oriented longitudinally with a diameter ($D_n$) and positioned at a set distance ($R_L$) from the longitudinal axis (10). These evacuation channels (9) connect the cooling channels (8) at their distal ends to the flutes' surfaces at their proximal ends, facilitating efficient chip removal.

FIG.3

EP 4 644 023 A2

## Description

## TECHNICAL FIELD

The present invention relates to a bit with inner cooling channels and chip evacuation channels the purpose of which is to optimize the injection of cutting fluids, thereby achieving a significant reduction in the dulling of the bit due to clogged chip, as well as the premature wear of the secondary cutting edges thereof.

The invention belongs to the technical sector related to machining, and particularly to the sector related to drilling and bits.

## BACKGROUND OF THE INVENTION

To increase productivity in chip removal manufacturing processes through the preservation of the service life of the tool, lubricants and coolants are typically used during said processes. As a result thereof, the friction existing between the tool-part interface can be reduced, and the temperature of the tool can be controlled.

However, to meet high market expectations, the way for injecting these lubricants and coolants must be controlled through different conduits and channels, such that it is possible to reach the tool-part interface effectively. The most effective way to achieve this is to provide cutting tools with inner conduits so that the lubricants and coolants are injected closest possible to said interface. To that end, the tool manufacturing sector has been working mainly on milling cutter- and bit-type rotary tools for the purpose of optimizing the designs of channels that run inside the tools so that the injection of lubricants and coolants is the most efficient possible.

Conventionally, drilling tools with inner cooling have several inner channels to axially conduct cutting fluids through their body to the cutting area, with these channels opening into the tip of the tool. Due to this design, current bits present chip evacuation problems, mainly in deep drill holes and ductile materials, leading to the dulling of the bit when machining holes, as a result of the inefficient sliding of the chip from the tip of the tool (cutting area) to the outside of the hole.

Likewise, current channel designs do not allow comprehensive control of the cutting temperature (which can reach values above 600°C) since only the tip of the tool is cooled, with the cooling of the body thereof being completely disregarded, and therefore also in certain cases (particularly in tempered materials), premature wear of the secondary cutting edges of the bits occur, causing them to break and therefore reducing their service life.

Given that current tools have their limitations, tool manufacturers have started to use new technologies to achieve an improved tool design which allows solving the problems of current tools.

Specifically, the laser powder bed fusion (L-PBF) technology which allows manufacturing parts designed directly from 3D CAD models is being used. This additive manufacturing technology consists of the use of a high-density laser in an inert argon atmosphere where there is deposited on a metal base a layer of metal powder spread on the platform of the chamber and, then, the laser melts areas based on the geometry to be manufactured. After solidification, the platform moves down and the process is repeated layer by layer until the designed part is obtained.

Accordingly, this technology allows printing any geometric design in 3D regardless of its complexity, therefore allowing the development of new advanced tools where not only their external geometry but rather, their inner conduits, in particular, can be manufactured in shapes that were not economically feasible up until now.

Both research centers and tool manufacturers are carrying out this line of work. From the commercial viewpoint, the Fraunhofer technology center has developed a tool marketed under the name ADDICUT® which is characterized by being a tool holder with exchangeable inserts that is provided with exchangeable components that allow one and the same tool holder to have different types of inserts.

Moreover, there is another type of tools, which is that presented by the company MAKE PARTS FASTS, which develops bits and reamers with exchangeable inserts having spiral-shaped conduits, having the outlet thereof at the tip of the tool, as is conventional.

Moreover, in relation with turning tools, the companies ARNO WERKZEUGE and ROSWAG ENGINEERING have jointly developed grooving and parting tools characterized by the optimization of their inner channels for improving the injection of cutting fluid in said operations.

Finally, in terms of chucks, the manufacturer MAPAL has developed chucks for tool holders HSK-E25 by means of SLM, whereby it capable of providing not only customized inner channels, but also achieving the direct gripping of tools up to 3 mm in diameter.

Moreover, in terms of patent documents, document EP1864748B1, which describes a tool holder with exchangeable inserts having conduits optimized as a result of the use of the SLM technology as the manufacturing method, has been identified.

Another document which describes a tool manufactured by SLM is document EP3478439B1. This document describes the head of the tool, since the shank is manufactured by means of conventional techniques. Heat treatment and post-processing are also included once the head is manufactured by means of LPB-F. Specifically, it describes heat treatment of at least 400°C, preferably 500°C, which is presumed to be tempering, as well as the tool shape being subsequently finished by means of EDM, grinding, or laser.

Furthermore, document CN108188460A describes the helical inner channels of a milling cutter manufactured by means of SLM. The document refers to centrifugal force and optimization of the use thereof as a result of the design of these new channels. Finally, document EP3875196A1 describes a milling tool manufactured by means of SLM the flute of which is made up of exchangeable inserts and it is also provided with inner channels. Furthermore, document US2020/0284146A1 presents a bit manufactured by means of SLM the lips of which are porous and therefore allow the entry therein of the material being cut for the purpose of enabling the subsequent analysis of the collected samples.

As can be seen, all the patent documents focused mainly on tools for milling and turning operations, by modifying mainly the external geometry thereof or the path of the channels through which coolants and lubricants run inside same, disregarding the way in which they are injected into the cutting area.

Likewise, it is important to highlight that, with respect to the current state of the art, there is no solution which prevents this phenomenon, and to that end, the strategy known as peck drilling is generally used, whereby the bit "enters and comes out of" the drill hole to clean the hole of chip with the subsequent loss of time.

In view of the foregoing, it is necessary to develop a bit which optimizes the injection of cutting fluids in drilling processes, as well as optimizes chip evacuation such that the possibility of the dulling of the tool due to clogged chip, as well as the premature wear of the secondary cutting edges of the bit due to an inefficient control of the temperature of the tool, are significantly reduced.

**DESCRIPTION OF THE INVENTION**

To overcome the drawbacks of the state of the art, the present invention relates to a bit with cooling channels and chip evacuation channels.

A first aspect of the invention relates to a bit provided with a shank at a proximal end, intended to be coupled to a machine tool, a body, and a tip at a distal end, with cutting lips, the bit further being provided with at least two flutes and at least two lands, each land being provided with an inner helical cooling channel such that a core radius is defined, the cooling channels being provided with an outlet opening at the tip of the bit, wherein the bit further comprises chip evacuation channels in which a distal end and a proximal end are defined, the chip evacuation channels being substantially longitudinal with a diameter $D_n$ and being arranged at a distance $R_L$ from the longitudinal axis of the bit such that:

$$R_l - \frac{D_n}{2} < R_n$$

and such that a distal end of each chip evacuation channel opens into a cooling channel and a proximal end opens into a surface of the flutes the longitudinal orientation component of which is in a distal-to-proximal direction.

The machine tool can be, among others, a drill, a milling cutter, or a lathe.

The end of the bit which is closest to the machine tool when it is coupled thereto through the shank is referred to as a proximal end. The opposite end, i.e., the end of the tip, which is the one in contact with the material when using the bit, is referred to as a distal end.

When the longitudinal orientation component is said to be in a distal-to-proximal direction, it means that it is oriented backwards, i.e., the surface of the flute into which the chip evacuation channel opens at its proximal end is oriented towards the shank of the bit.

The helical grooves running longitudinally along the body of the bit are referred to as flutes.

When indicating that the chip evacuation openings are substantially longitudinal, it is important to point out that these openings may not be completely parallel to the longitudinal axis of the bit and may have an orientation contained in a cone with certain opening with respect to said longitudinal axis.

The inner cooling channels of the present invention, unlike conventional bits, have been optimized since, in addition to comprising an outlet at the tip of the tool, they have been combined with the chip evacuation channels along the flutes of the bit through which the chip runs, thereby favoring chip evacuation, since the fluid is injected "in favor" of the flute, from the proximal end to the distal end, and therefore the pressure of the cutting fluid pushes the chip along the entire flute without head losses, causing it to come out of the hole in a more efficient manner. The cutting fluid is thus injected tangential to the flute and therefore "pushes" the chip out of the hole, preventing said chip from becoming clogged due to the pressure at which the cooling fluid is injected. Furthermore, these chip evacuation channels favor the breaking up of the chip.

Likewise, as a result of these chip evacuation channels, a greater control of the temperature of the tool, which is a parameter that directly influences the service life thereof, is achieved due to the more efficient hydraulic cushion formed between the tool and the walls of the hole, as well as the expansion of the cutting fluids through the entire body of the tool and not only at the tip, as occurs with the current bits.

Additionally, the multiple outlets of the chip evacuation channels give rise to a smaller pressure difference between the upper portion and the lower portion of the bit, which gives rise to a more efficient flow of the cutting fluid, giving rise to a homogeneous cooling of the entire tool. This last aspect allows a good temperature control, as well as an increase in the service life of the tool and an improvement in the performance thereof.

Furthermore, in the case of using liquefied gases as cutting fluids, the distribution of the conduits allows the expansion of said controlled gases along the entire tool, obtaining a heat exchanger that prevents the premature wear thereof.

The result is a bit that can be optimally used particularly in deep drilling and in drilling of ductile materials with a robustness not observed with any tool today.

In an embodiment of the invention, the flutes form an angle with respect to the longitudinal axis of the bit comprised in a range of 0°-45°. Furthermore, in an embodiment of the invention the bit has a tip angle comprised between 90°-150°.

Varying these angles can cause a significant difference in the performance of the bit. To that end, the angles must be adapted based on the application in which the bit will be used.

In an embodiment of the invention, the chip evacuation channels form an angle of between 20° and 90° with respect to the longitudinal axis of the bit. This value is established according to the flute angle of the bit such that the established value favors the removal of the chip from the hole to be performed effectively since, on one hand, it is intended for the cutting fluid to be injected tangent to said angle in order to increase the chip removal speed, and on the other hand, for the cutting fluid to form, at the same time, a hydrostatic cushion between the channeling of the flute and the chip, which reduces the friction between the chip and the bit, such that the combination of both effects translates into the fastest possible evacuation of the chip from the hole.

Choosing this angle allows adapting the bit to the application in which it will be used, depending on the type of material, among other factors.

In an embodiment of the invention, the chip evacuation channels have a diameter comprised between 0.5 and 2 mm.

This diameter will vary based on the application in which the bit will be used, given that the chips may be continuous or discontinuous, harder or softer, etc., particularly based on the material to be drilled, and therefore the diameter of the conduit must be suitable to enable evacuating said chip properly.

In an embodiment of the invention, the outlet openings of the cooling channels are arranged in the cutting lips of the tip of the bit, forming an angle of between 0° and 90° with respect to the longitudinal axis of the bit.

Like in the preceding cases, this angle will be chosen based on the application in which the bit will be used, depending on the type of material to be used or on the type of opening to be made, and also depending on where the cutting fluid will be applied most directly.

In an embodiment of the invention, the cooling channels have a diameter comprised between 0.5 and 2 mm.

This diameter will be chosen based on the application in which the bit will be applied, particularly depending on the type of cutting fluid and its viscosity.

In view of the foregoing, this invention achieves not only a better control of the temperature of the tool, but also favors chip evacuation, increasing the robustness of current drilling processes.

Accordingly, the present invention seeks to provide an answer not only to the need of increasing the service life of drilling tools and improving chip evacuation through an optimization of the injection of cutting fluids, but it also optimizes the environment footprint generated in the case of using liquefied gases.

To that end, with the invention shown herein, the productivity of the processes is increased through the reduction of manufacturing times (since it is not necessary to "enter and come out of" the hole) and the service life of the tool is also increased through the reduction of the thermal and mechanical stresses suffered by conventional bits today.

The bit of the invention is intended for application in drilling processes where chip evacuation is vital to achieve a robust and reliable machining process. To that end, this type of bit is particularly intended for deep drilling processes (where the depth-diameter ratio of the bit is greater than three) and for ductile materials, characterized by being "sticky" and adhering to the walls of the bits, since these are situations in which the dulling of bit is rather normal and therefore makes it difficult to achieve reliable processes. Specifically, these two situations occur mainly in the sectors of machining oil and gas parts, molds and dies, as well as plastic tooling.

**BRIEF DESCRIPTION OF THE DRAWINGS**

As a complement to the description, and for the purpose of helping to make the features of the invention more readily understandable, in accordance with preferred practical exemplary embodiments of the light fixture of the invention, said description is accompanied by a set of figures which, by way of illustration and not limitation, represent the following:

Figure 1 shows a general view of the bit with cooling channels and chip evacuation channels.

Figure 2 shows an inner view of the cooling channels and the chip evacuation channels in the bit.

Figure 3 shows a view of the cooling channels and the chip evacuation channels.

Figure 4 shows a longitudinal section of the bit.

**PREFERRED EMBODIMENT OF THE INVENTION**

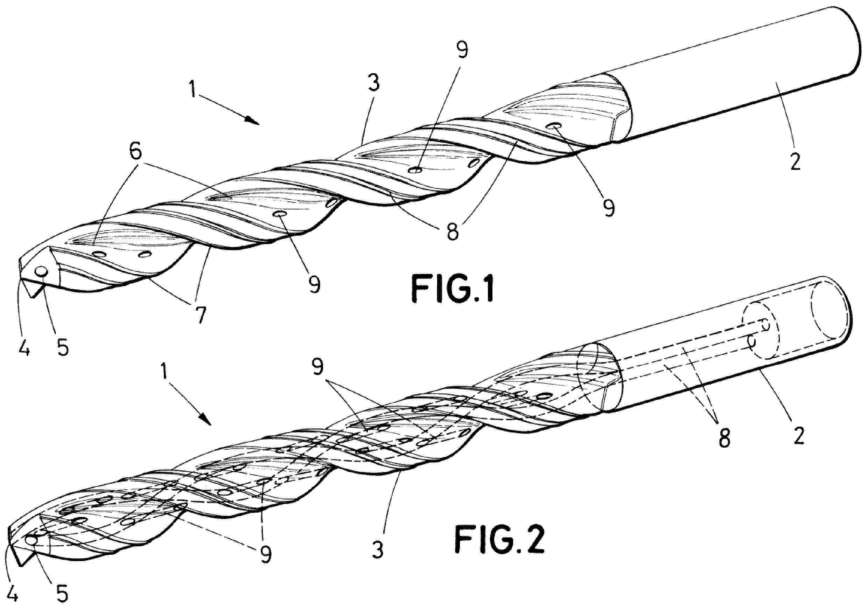

As shown in Figure 1, the invention relates to a bit 1 with cooling channels 8 and chip evacuation channels 9.

As shown in Figure 1, the bit 1 comprises a central body 3, which defines a longitudinal axis 10, with two ends. At a proximal end of the body 3, the bit 1 comprises a shank 2, intended to be coupled to a machine tool. Furthermore, at a distal end, the bit 1 comprises a tip 4 with cutting lips 5, which are intended to come into contact with the material to be drilled.

As can be seen in Figure 1, the bit 1 also comprises two flutes 6 and at least two lands 7, extending along the body 3 of the bit 1, from the shank 2 to the tip 1.

Figure 2 depicts a view of the inside of the bit 1 in which it can be seen how each land 7 is provided with an inner helical cooling channel 8. This cooling channel 8 follows a helical trajectory about the central axis 10 of the bit 1, maintaining a constant distance with respect to same, such that a core radius $R_n$ is defined.

The bit 1 preferably comprises one cooling channel 8 per flute 6. The cooling channels 8 comprise an inlet opening preferably arranged in the shank 2 of the bit 1. Furthermore, they comprise an outlet opening for the exit of the cutting fluid at the tip 4 of the bit 1, in order to keep it cold throughout the entire drilling process.

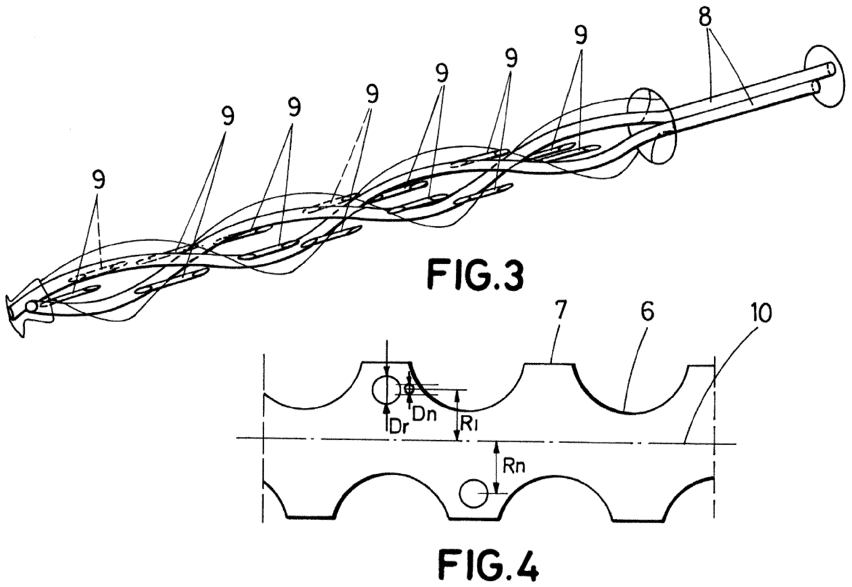

Furthermore, as shown in Figure 2, and in more detail in Figure 3, the bit 1 comprises chip evacuation channels 9. A distal end and a proximal end are defined in these chip evacuation channels 9, with the proximal end being the one closest to the shank 2 and the distal end the one closest to the tip 1, as with the body 3 of the bit 1.

As shown in Figure 3, the chip evacuation channels 9 are substantially longitudinal, and in an embodiment shown in detail in said Figure 3, parallel to the longitudinal axis 10 of the bit 1. However, these chip evacuation channels 9 may not be completely longitudinal and may form a certain angle with the longitudinal axis 10 of the bit.

Figure 4 shows a schematic view of the inner channels 8, 9 of the bit 1 and their arrangement in the body 3 thereof. As can be seen, the chip evacuation channels 8 have a diameter $D_n$ and are arranged at a distance $R_l$ from the longitudinal axis 10 of the bit 1 such that:

$$R_l - \frac{D_n}{2} < R_n$$

In turn, the cooling channels have a diameter $D_r$.

As can be seen in Figure 3, a distal end of each chip evacuation channel 9 opens into a cooling channel 8 and a proximal end opens into a surface of the flutes 6 the longitudinal orientation component of which is in a distal-to-proximal direction. In this way, the removal of the chip at the same time as the cooling of the bit 1 is ensured.

In an embodiment of the invention shown in Figure 1, the body 3 of the bit 1 is made of high-speed tool steel or hard metal. The flutes are arranged at an angle of 118° with respect to the central axis 10. The two cooling channels 8, as well as several chip evacuation channels 9, with multiple outlets, particularly sixteen outlets, run inside the body. As set forth above, the chip evacuation channels 9 communicate the cooling channels 8 with the outside. The chip evacuation channels 9 have an angle of between 20° and 90° with respect to the cooling channels 9.

The number of chip evacuation channels 9 coupled to the cooling channels 8 will depend on the length of the bit 1. Likewise, the diameter of these chip evacuation channels 9 will also depend on the size of the bit 1, preferably having a diameter of between 0.5 and 2 mm.

In an embodiment of the invention, the method of manufacturing the bit 1 is through the laser powder bed fusion, L-PBF, additive manufacturing technology. In this method, a layer of preferably metal powder with a thickness of between 20 and 60 $\mu$m is first spread on a platform arranged in a chamber which is in an inert argon atmosphere with low oxygen levels, preferably less than 0.2%.

Next, a heat source, particularly a laser of between 100 and 400 W, melts selective areas of the powder to manufacture the desired part, in this case, the bit 1. After melting the powder material, the platform moves down and the process is repeated layer by layer. Once the bit 1 is obtained, it must be separated from the base, preferably by means of mechanical cutting or wire electrical discharge machining.

Moreover, in the case where the surface finish obtained is not the one desired, the manufactured parts can preferably be polished using the drag finishing technology or the like.

Finally, to enable preparing the bits 1 obtained for machining, both their tip 4 and their edges must be sharpened preferably using grinding processes.

    Bit 1
    Shank 2
    Body 3
    Tip 4
    Cutting lip 5
    Flute 6
    Land 7
    Cooling channel 8
    Chip evacuation channel 9
    Longitudinal axis of the bit 10
    Core radius $R_n$
    Chip evacuation channel diameter $D_n$
    Distance to chip evacuation channel $R_l$
    Cooling channel diameter $D_r$

**Claims**

1. A bit (1) provided with a shank (2) intended to be coupled to a machine tool at a proximal end, a body (3), and a tip (4) with cutting lips (5) at a distal end, provided with at least two flutes (6) and at least two lands (7), each land (7) being provided with an inner helical cooling channel (8) such that a core radius ($R_n$) is defined, the cooling channels (8) being provided with an outlet opening at the tip (4) of the bit (1), the bit (1) being **characterized in that** it comprises chip evacuation channels (9) in which a distal end

**EP 4 644 023 A2**

and a proximal end are defined, the chip evacuation channels (9) being substantially longitudinal with a diameter ($D_n$) and being arranged at a distance ($R_L$) from the longitudinal axis (10) of the bit (1) such that:

$$R_l - \frac{D_n}{2} < R_n$$

and such that the distal end of each chip evacuation channel (9) opens into a cooling channel (8) and the proximal end opens into a surface of the flutes (6) the longitudinal orientation component of which is in a distal-to-proximal direction.

2. The bit (1) according to claim 1, in which the flutes (6) form an angle with respect to a longitudinal axis (10) of the bit (1) comprised in a range of 0°-45°.

3. The bit (1) according to any of the preceding claims, comprising a tip angle comprised between 90-150°.

4. The bit (1) according to any of the preceding claims, wherein the chip evacuation channels (9) form an angle of between 20° and 90° with respect to the cooling channels (8).

5. The bit (1) according to any of the preceding claims, wherein the chip evacuation channels (9) have a diameter comprised between 0.5 and 2 mm.

6. The bit (1) according to any of the preceding claims, wherein the outlet openings of the cooling channels (8) are arranged in the cutting lips (5) of the tip (4) of the bit (1) forming an angle of between 0° and 90° with respect to the longitudinal axis (10) of the bit (1).

7. The bit (1) according to any of the preceding claims, wherein the cooling channels (8) have a diameter comprised between 0.5 and 2 mm.

FIG.1

FIG.2

FIG.3

FIG.4

**REFERENCES CITED IN THE DESCRIPTION**

**Patent documents cited in the description**

- EP 1864748 B1
- EP 3478439 B1
- CN 108188460 A
- EP 3875196 A1
- US 20200284146 A1